# EUROPÄISCHE PATENTANMELDUNG

(11) **EP 0 997 174 A1**
(43) Veröffentlichungstag der Anmeldung: **03.05.2000**
(21) Anmeldenummer: 99120670.7
(22) Anmeldetag: 19.10.1999
(51) Int. Cl.: A63F 13/08, G06F 3/033, A63B 71/00

(54) **Abnehmbarer Überzug für die Grifffläche einer Eingabeeinheit**

(30) Priorität: 21.10.1998 DE 29818688 U
(71) Anmelder: Baumann, Frank, 21220 Seevetal/Ramelsloh (DE)
(72) Erfinder: Baumann, Frank, 21220 Seevetal/Ramelsloh (DE)
(74) Vertreter: Schupfner, Gerhard D., Dr. Dipl.-Chem.

(57) **Zusammenfassung**

Gegenstand der Erfindung ist ein abnehmbarer Überzug für eine elektronische Eingabeeinheit, wie eine Maus, einen Controller (1) oder einem Joystick.

## Beschreibung

Die Erfindung betrifft einen Überzug für die Grifffläche einer elektronischen Eingabeeinheit, wie einer Maus, einem Joystick oder insbesondere einem Controller.

Eingabeeinheiten für Computer, Spielkonsolen oder tragbare elektronische Spiele sind bekannt. Die Eingabeeinheit ist eine Steuereinheit, die meist von der Zentraleinheit, z.B. der Computer- oder Spieleinheit, getrennt gehalten ist und mit dieser durch Übertragungsvorrichtungen wie Kabel oder Infrarotsende- und -empfangsvorrichtungen verbundenen ist. Aufgabe der Eingabeeinheit ist es, die Befehle des Benutzers - in der Regel in Form von mechanischen Signalen- in elektrische /elektronische Steuerimpulse umzusetzen. Zur Umsetzung der mechanischen Signale in elektrische Signale sind Eingabevorrichtungen wie Schalter, sich drehende Räder, Steuerknüppel, rotierende Bälle, drucksensitive Flächen oder auf Bewegungsänderungen reagierende träge Körper bekannt.

Daher ist es in den meisten Fällen erforderlich, daß die Eingabeeinheit von dem Benutzer in der Hand gehalten und/oder mit der Hand geführt wird. Gegenstand der Erfindung ist ein Überzug, der einen sicheren und angenehmen Griff solcher handgehaltener Eingabeeinheiten ermöglicht.

Aus der US 5,501,458 ist ein Bezug für einen Controller bekannt, der aus einem Stück oder mehreren Segmenten gearbeitet ist und mittels aufgeklebter sich verhakender klettverschlußartiger Flächen (mit Haken und Schlaufen) auf den Controller aufgebracht ist.

Aus der US 5,046,739 ist ein aus einem Stück gearbeiteter Griff mit festem Gehäuse bekannt, der auf einen Controller aufgeschoben wird und ein ergonomisches Greifen der Eingabeeinheit gewährleisten soll.

Aufgabe der Erfindung ist es, die aus dem Stand der Technik bekannten Lösungen zu verbessern und deren Nachteile zu überwinden. Die aus der US 5,046,739 bekannten Griffe weisen den Nachteil auf, daß sie in und entgegen der Aufschubrichtung der Griffschalen keinen festen Halt mit der Eingabeeinheit gewährleisten. Der Benutzer muß daher neben der Bedienung der Eingabevorrichtungen auch dafür Sorge tragen, daß die Griffschalen die Eingabeeinheit fest umfassen Der aus der US 5,501,458 bekannte Bezug gewährleistet ebenfalls nicht, daß dieser fest und sicher die Griffflächen umschließt. Im übrigen neigen Klettverschlüsse dazu, mit der Zeit weniger gut zu schließen und unansehnlich zu verfusseln.

Aufgabe der vorliegenden Erfindung ist es, einen abnehmbaren festsitzenden Überzug für die Griffflächen von elektronischen Eingabeeinheiten zur Verfügung zu stellen, der eine sichere Führung der Eingabevorrichtungen gewährleistet und in der Lage ist, Transpiration zu verhindern, aufzunehmen, oder zumindest auch bei Ausbildung einer gewissen Feuchte zwischen Hand und Griffflächen einen sicheren und angenehmen Halt zu gewährleisten.

Weiterhin ist es Aufgabe der Erfindung, daß der Überzug gewährleistet, daß mechanische Impulse, die z.B. zur Steigerung des Spielvergnügens, von der Eingabeeinheit ausgeübt werden, wie etwa Stöße oder Vibrieren, an z.B. die Handflächen des Benutzers, unmittelbar weitergegeben werden.

Erfindungsgemäß wird eine abnehmbarer Überzug insbesondere für die Griffflächen einer elektronischen Eingabeeinheit- der darüber hinaus auch die gesamte Eingabeeinheit überspannen kann - bereitgestellt, der die Mängel des Standes der Technik überwindet und folgende Merkmale aufweist:
- Er ist aus einem in der Fläche elastischen, d.h. dehnbaren, Material gearbeitet, das nach Aufbringen auf die Griffflachen der Eingabeeinheit eine Flächenausdehnung erfährt und
- mit der Oberfläche der Eingabeeinheit eine fest ansitzende und rutschfeste Verbindung ausbildet.

Vorzugsweise weist der Überzug keine weiteren, den Halt sichernden Vorrichtungen wie Haken, Ösen, Gummizüge oder Klettverschlüsse auf. Der Überzug ist vorzugsweise so gearbeitet, daß im wesentlichen lediglich die Griffflache(n) der Eingabeeinheit bedeckt sind und z.B. die Eingabevorrichtung(en) ausgespart sind und somit frei zugänglich sind. Der Überzug - soweit er lediglich für die Griffflächen vorgesehen ist - ist vorzugsweise kegelförmig ausgebildet und besteht zu mindesten 50 Flächen% aus dem in der Flache elastischen, d.h. dehnbaren, Material.

Nach einer bevorzugten Ausführungsform der Erfindung besteht der Überzug oder zumindest eine Schicht des Überzuges aus einem elastischen, nach Krafteinwirkung rückstellfähigem Material, das auch in Richtung der Flächennormale eine gewisse Elastizität bzw. Verformbarkeit aufweist. Diese Schicht kann z.B. aus einem, ggf. geschäumten, nachgiebigen Kunststoffmaterial, z.B. Neopren ®, gearbeitet sein.

Vorzugsweise ist der Überzug aus zumindest zwei Schichten, vorzugsweise drei Schichten, aufgebaut, von denen zumindest eine Schicht aus dem oben ausgeführten in Richtung der Flächennormale nachgiebigen Material gefertigt ist. Die weitere Schicht (weiteren Schichten) kann (können) ein sich an der Außenseite des Überzuges befindendes flächiges Material (Oberflächenmaterial) und / oder ein sich an der Innenseite des Überzuges befindendes Material sein, das eine rutschfeste Verbindung mit dem Gehäuse der Eingabeeinheit gewährleistet. Bevorzugt weist das an dem Gehäuse der Eingabeeinheit anliegende Material eine strukturierte Oberfläche, etwa kleine Erhebungen in Form von Noppen, auf.

Das sich an der Außenseite befindende flächige Material kann farbig oder mehrfarbig ausgebildet sein und soll einen griffsicheren und angenehmen Hautkontakt - auch mit ggf. transpirations-feuchten Handinnenflächen - gewährleisten und kann darüber hinaus dekorativ gestaltet sein. Geeignete Oberflächenmaterialien sind solche, wie sie typischerweise auch im Bekleidungssektor eingesetzt werden, wie z.B. Baumwolle, Jersey oder Nylon.

Das in Richtung der Flächennormale eine Elastizität bzw. Verformbarkeit aufweisende Material kann ein geschäumter oder nicht geschäumter Kunststoff, wie z.B. Neoprene ® sein oder z.B. aus Isopren hergestellt sein.

Für den erfindungsgemäßen Überzug geeignete mehrschichtige Materialien sind z.B. aus der Herstellung von Tauchanzügen und Wetsuits bekannte Materialien. Solche Materialien enthalten bzw. bestehen z.B. einer Neopren-Schicht, einer Jersey-Oberfläche und können zusätzlich eine 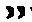 Metal-Plush"-Kaschierung als Verstärkung enthalten.

Die Eingabeeinheit kann eine Computer-Maus, ein Controller - auch 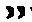 Joypad" oder 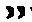 Gamepad" genannt - , wie er z.B. für Spielkonsolen verwendet wird, oder ein Joystick sein. Der Überzug ist vorteilhafterweise so ausgebildet, daß er für Controller unterschiedlicher Hersteller anwendbar ist. Vorzugsweise kann der Überzug, z.B. mit einer Schere, auch durch den Endanwender in einfacher Weise an eine andersartige Form angepaßt oder auch individuell gestaltet werden.

Ggf. kann es erforderlich sein, z.B. um die Eingabevorrichtung(en) vor äußeren Einflüssen zu schützen, daß die Eingabevorrichtungen, oder Teile derselben von dem Überzug bedeckt werden, in diesem Fall ist der Überzug so gearbeitet, daß eine Weiterleitung des mechanischen Impulses an die Eingabevorrichtung gewährleistet bleibt.

Weiterhin kann der Überzug so ausgearbeitet ein, daß er Griffmulden oder sonstige den Halt verbessernde Ein- und Ausbuchtungen aufweist. Der Überzug bzw. eine Schicht des Überzuges muß nicht notwendigerweise über seine gesamte Fläche aus demselben Material bestehen (Flächen- und Dickenhomogenität). Vorzugsweise weist der Überzug jedoch eine Stärke (Schichtdicke) von 0,5 bis 5 mm, besonders bevorzugt von 1,5 bis 3 mm auf (abgesehen von ggf. vorhandenen Ausbuchtungen). Vorzugsweise kann das Material weiterhin durch einfachen Druck, d.h. durch Krafteinwirkung, in Richtung der Flächennormale, wie er etwa von den Fingern ausgeübt werden kann, zumindest etwa um die Hälfte seiner Stärke vermindert werden.

Nach einer weiteren Ausgestaltung der Erfindung enthält der Überzug feste unverformbare oder nur unter Krafteinwirkung (irreversible, d.h. sich nicht selbst zurückstellend) verformbare, vorzugsweise flächige, Bestandteile. Diese können etwa als verformbare Metallschienen, z.B. aus Aluminium, ausgebildet sein und in das in der Fläche dehnbare Material eingearbeitet, aufgeklebt oder an dieses angesetzt sein. Mit Hilfe dieser als Schienen wirkenden Bestandteile gelingt es etwa Ausbuchtungen des zu überspannenden Körpers paßformgenau zu überkleiden.

Der Überzug weist weiterhin den Vorteil auf, daß er nach Gebrauch von der Eingabeeinheit abgenommen, z.B. mit Wasser gereinigt und getrocknet, und erneut aufgebracht werden kann. Überdies erlaubt er, die als Massenware gefertigten Eingabeeinheiten individuell zu gestalten und steigert den Benutzungskomfort.

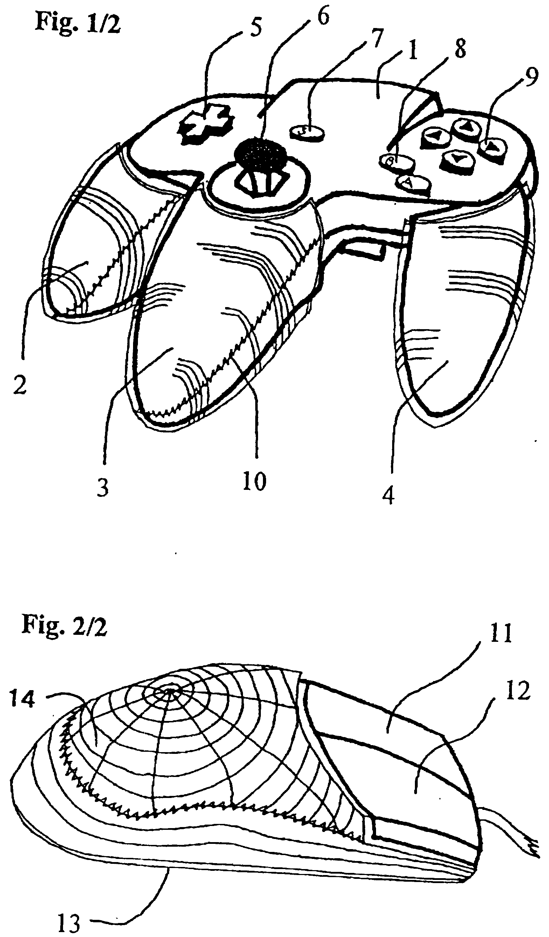

Im folgenden wird auf die Figuren 1 und 2 Bezug genommen, die einen erfindungsgemäßen Überzug für Eingabeeinheiten darstellen.

Figur 1 stellt einen Game-Controller (Spiel-Controller) (1) dar, dessen 3 Griffflächen (2), (3) und (4) jeweils mit einem Überzug versehen sind. Der Überzug läßt die Eingabeeeinheiten (5), (6), (7), (8) und (9) frei. Der Überzug kann so gearbeitet sein, daß er in etwa mittig eine Naht (10) aufweist. Selbstverständlich ist es auch möglich, den Überzug aus einem Stück ohne Nähte zu fertigen oder durch Verschweißen der Nähte diese weitgehend zu verbergen.

In Figur 2 ist ein Überzug (14) für eine Computer-Maus dargestellt. Auch hier sind die Eingabeeinheiten, die Tasten (11) und (12), ausgespart. Der Überzug (14) setzt sich in der abgebildeten Ausführungsform der Erfindung unterhalb der Tasten (11) und (12) fort, spart aber die Unterseite (13) der Maus aus.

Der Überzug kann durch Zuschneiden geeigneter z.B. mehrschichtiger flächiger Kunststoffe und Vernähen und/oder Verkleben hergestellt sein. Es ist aber auch möglich, einen mehrschichtigen Überzug im Spritzgußverfahren herzustellen, wobei entweder in die Form, vorzugsweise auf die die Außenfläche bildenden Teile der Form, ein zweites Material aufgebracht wird oder der Überzug nach Fertigstellung der spritzgegossenen Rohform elektrostatisch beflockt oder anderweitig beschichtet wird.

## Patentansprüche

1. Abnehmbarer Überzug für eine Eingabeeinheit, der ein in der Fläche elastisches Material aufweist, das nach Aufbringen auf die Eingabeeinheit eine Flächenausdehnung erfährt und mit der Oberfläche der Eingabeeinheit eine fest ansitzende und rutschfeste Verbindung ausbildet und zumindest eine Grifffläche der Eingabeeinheit bedeckt.

2. Abnehmbarer Überzug gemäß Anspruch 1, **dadurch gekennzeichnet, daß** der Überzug oder zumindest eine Schicht des Überzuges aus einem elastischen Material besteht, daß auch in Richtung der Flächennormale eine Elastizität bzw. Verformbarkeit aufweist.

3. Abnehmbarer Überzug gemäß einem der vorhergehenden Ansprüche, **dadurch gekennzeichnet, daß** das Material gemäß Anspruch 1 oder 2 ein Kunststoff ist, vorzugsweise ein geschäumter Kunststoff.

4. Abnehmbarer Überzug gemäß Anspruch 2 oder 3, **dadurch gekennzeichnet, daß** der Überzug aus zumindest zwei Schichten aufgebaut ist, von denen
(a) eine Schicht aus einem Material gemäß Anspruch 2 oder 3 besteht und
(b) die weitere Schicht, bzw. weiteren Schichten,
- ein sich an der Außenseite befindendes flächig ausgebildetes Material ist und / oder
- ein sich an der Innenseite befindendes flächig ausgebildetes Material ist mit vorzugsweise strukturierter Oberfläche, das eine rutschfeste Verbindung mit dem Gehäuse der Eingabeeinheit gewährleistet.

5. Abnehmbarer Überzug gemäß einem der vorhergehenden Ansprüche, **dadurch gekennzeichnet, daß** der Überzug weiterhin feste, im wesentlichen unverformbare oder nur unter Krafteinwirkung verformbare Bestandteile zum paßformgenauen Überkleiden von Einbuchtungen der Eingabeeinheit aufweist.

6. Eingabeeinheit versehen mit einem oder mehreren Überzügen gemäß einem der vorhergehenden Ansprüche.

7. Eingabeeinheit oder Überzug gemäß einem der vorhergehenden Ansprüche, **dadurch gekennzeichnet, daß** die Eingabeeinheit eine Computer-Maus, ein Controller, wie er z.B. für Spielkonsolen verwendet wird, oder ein Joystick ist.
